# EUROPEAN PATENT SPECIFICATION

(11) **EP 2 320 204 B1**
(45) Date of publication and mention of the grant of the patent: **01.01.2014**
(21) Application number: 10189232.1
(22) Date of filing: 28.10.2010
(51) Int. Cl.: G01H 1/00, G01B 11/27, G01M 13/02

(54) **Device and method for measuring the alignment state the vibration of a rotating machine**
Vorrichtung und Verfahren zur Messung der Ausrichtung und der Schwingung einer rotierenden Maschine
Dispositif et procédé de mesure de l'alignement et de la vibration d'une machine rotative

(30) Priority: 05.11.2009 DE 102009053132
(43) Date of publication of application: 11.05.2011
(73) Proprietor: PRÜFTECHNIK Dieter Busch AG, 85737 Ismaning (DE)
(72) Inventor: Busch, Dieter, 85737, Ismaning (DE); Becker, Edwin, 48734, Reken (DE); Lösl, Johann, 84172, Buch am Erlbach (DE); Lysen, Heinrich, 85748, Garching (DE)

(56) References cited:
- US-A1- 2005 018 537
- US-A1- 2008 201 097
- US-B1- 6 873 931

## Description

### Technical Field

The invention relates to a device with which both measurement of the alignment state and also measurement of a vibration of a rotating machine are possible, and a method for determining a quality characteristic of alignment of a rotating machine.

### Background Art

Devices are known with which alignment for example of two shafts to one another can be measured. In machinery, motors for example drive pumps, the relative alignment from the motor to generally heavier pumps having a major effect on the service life of the entire machine and its components. These devices contain an electronic evaluation device, a first optoelectronic transmitting and/or receiving unit and a second optoelectronic transmitting and/or receiving unit or a reflector instead of the second transmitting and/or receiving unit. These devices are described for example in EP 0 145 745 or EP 0 367 814.

US 6,873,931 describes an alignment device wherein an accelerometer is being used to determine the orientation of the optoelectronic sensor heads of the alignment device. The application describes the use of the accelerometer during alignment measurements, when the rotating machine to be aligned is at a standstill.

Moreover, devices are known with which vibration measurements are taken and to which an optoelectronic transmitting and/or receiving unit (hereinafter also called an alignment sensor) of an alignment device, as is described in the aforementioned patents, can be connected. In this case, in the past the vibration sensor and the sensor of the alignment device had always been connected separately to the electronic evaluation device. These combined devices for alignment and for vibration measurement are available for example from the applicant under the name smartSCANNER. Both alignment sensors like the first optoelectronic transmitting and/or receiving unit and a second optoelectronic transmitting and/or receiving unit (which can also be omitted when using a reflector) as well as vibration sensors can be connected to the electronic evaluation unit of the smartSCANNER. An inclinometer is contained in at least one of the two optoelectronic transmitting and/or receiving units.

These devices are suitable for taking both alignment measurements and also vibration measurements, but entail problems in reliable handling and in evaluation of the measurement data. When the machine is shut down, alignment measurements are taken. Afterwards misalignment which may be present is corrected. These activities are often undertaken in a production shutdown, therefore on the weekend or at night. After restarting the machine it is a good idea to take a vibration measurement in operation.

### Summary of invention

As a result of more difficult working conditions at unusual times it can happen that the optoelectronic transmitting and/or receiving units are forgotten on the shafts of the machine during dismounting after the alignment procedure is completed and are damaged when the machine is started. Moreover fatigued personnel often have difficulties in distinguishing or correctly assigning the directions for measurements of vibrations of the axial direction and vibrations of the radial direction in vibration measurement. This also applies especially when the personnel are not adequately trained or are fatigued. Furthermore, it is difficult to bring the corrected alignment which has been determined using the measurement device into agreement with the vibration picture. Moreover data which enable this assignment of alignment and vibration data, such as tolerance data or reference spectra of vibration pictures, are often contained in extensive databases which are stored on remote computers and whose contents are not available at all to personnel at the facility at this time or cannot be easily found.

Another problem is the different electronic components which are required for vibration measurement devices and alignment sensors for the evaluation of the signals of vibration sensors, optical position detectors and inclinometers before the signals can be further processed in the central processor of the electronic output unit.

This object is achieved by this invention on the one hand by simplification of the handling of the measurement device and its parts by one of the two optoelectronic transmitting and/or receiving units which are necessary for alignment also being used to take the vibration measurement; and on the other hand by simplification of the measurement process in that the measurement device displays a characteristic for the combination of the alignment quality and the vibration picture and it is further communicated to the user on the display of the measurement device how many of the data necessary for determining of the characteristics have been recorded. This characteristic is displayed to the personnel in an easily accessible and understandable form. Thus, prompt and simple joint evaluation of the result of the alignment process and of the vibration picture becomes possible.

Simplification of handling is achieved by the vibration sensor being connected not to the electronic evaluation unit, as in the past, but directly to the alignment sensor, or it preferably being installed in the alignment sensor. This results in that the operators are forced to handle the alignment sensor in the preparation of the vibration measurements (which are performed after the machine has started up again from standstill) after completed alignment (which has been performed during this standstill). Thus the alignment sensor cannot be forgotten on the machine. This aspect of the invention is further improved by the second measure of display of the degree of detection of a common characteristic for the alignment as claimed in the invention and for the vibration picture and display of this characteristic.

In the combination of the vibration sensor and alignment sensor, a further increase of reliability and simplification in operation is achieved in that the inclinometer contained in at least one of the two optoelectronic transmitting and/or receiving units also enables checking of the alignment of the vibration sensor in the vibration measurement, especially whether alignment of the vibration sensor is in the axial direction to the aligned shafts or in the radial direction to them. In this way the reliability of the determined vibration data is greatly increased.

In the implementation of this approach it was surprisingly found that with a suitable selection of the vibration sensors and of the inclinometer the electronics for preprocessing of the signals of these two sensors can be combined before they are relayed from the alignment sensor to the electronic evaluation unit when the components are suitably chosen. Electronics here include components such as signal amplifiers, filters and A/D converters. This constitutes both a simplification of the structure of the sensors and also cost savings.

It is even possible to implement the two sensors in a single common module, for example when the vibration sensor and the inclinometer are made as MEMS modules. Regardless of whether the vibration sensors and inclinometers are one or more modules, it is a good idea for these sensors to be able to detect signals in two or three dimensions. Therefore preferably two- or three-dimensional inclinometers or two- or three-axle vibration transducers are used.

A second aspect of the invention for simplification of operation and handling of this combined vibration and alignment device is the display of an easily understandable value in the form of a characteristic with which a prompt and reliable conclusion about the instantaneous vibration state and the success of the alignment measure is made available to the operators. This factor also encompasses the fact that the personnel of the alignment and vibration measurement device on the display of the electronic evaluation device are also notified of how many of the data required for determining this characteristic have been recorded with the device.

The common characteristic for alignment and the vibration picture takes into account the values measured after alignment with the alignment sensor and the alignment tolerances as well as the vibration picture after restarting the machine. For detection and numerical description of this vibration picture different vibration characteristics can be used. These vibration characteristics can be the following: the ratio of the vibration intensity measured in the radial direction to the vibration intensity measured in the axial direction, the ratio of the vibration signal measured at the current rotary frequency of the machine to the vibration signal measured at the harmonic of the current rotary frequency, the ratio of the vibration signal in operation of the machine before alignment to the vibration signal recorded under comparable conditions in the operation of the machine after alignment.

### Brief description of drawings

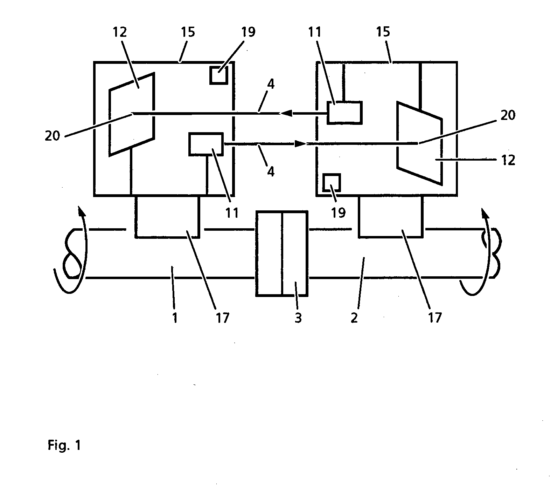

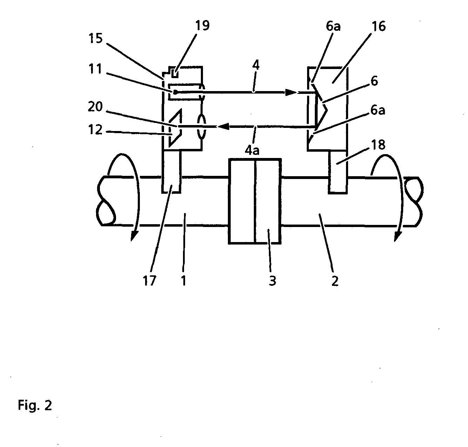

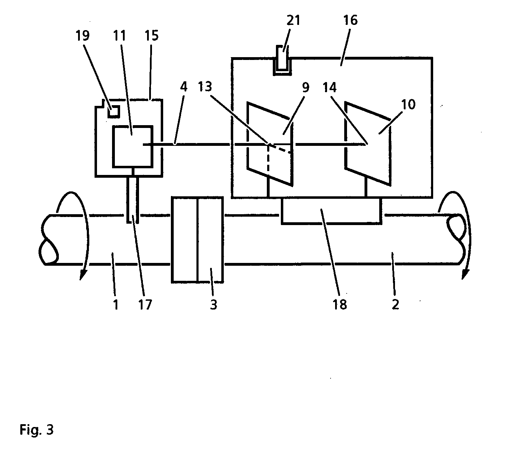

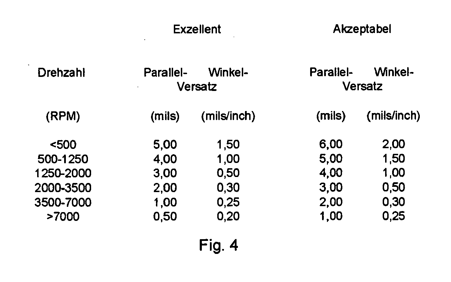

The invention is described below using the attached figures. Figure 1 shows the alignment device with two optoelectronic transmitting and receiving units. Figure 2 shows an alignment device with one optoelectronic transmitting and receiving unit and a reflector. Figure 3 shows an alignment device with one optoelectronic transmitting unit and one optoelectronic receiving unit. Figure 4 shows a table which contains the alignment tolerances for the offset values determined with the alignment devices of Figures 1-3.

### Description of embodiments

Figure 1 shows a conventional alignment device which is attached to two horizontally positioned shafts 1, 2 which are connected to each other by means of a coupling 3. The two shafts can belong for example to a motor and a pump which is driven by this motor and which is a component of a larger machine. On holding devices 17 housings 15 are attached to these shafts and in the housings one light source 11 and one one- or two-dimensionally readable photosensitive sensor 12 at a time are installed. This attachment takes place such that one light source is always opposite a sensor. In the alignment measurement each light source 11 emits a light beam 4 which is received on the detector 12 and whose incidence position 20 is electronically evaluated in order to determine and if necessary correct the offset of the two shafts 1 and 2. Conventionally at least one of these housings 15 contains an inclinometer 19. As claimed in the invention this inclinometer is also used for vibration measurements.

Figure 2 describes a simpler alignment device in which the transmitting and receiving unit on the shaft 1 corresponds essentially to the embodiment of Figure 1. Instead of a second transmitting and receiving unit however a reflector 6 is mounted on the shaft 2 and reflects the light beam 4 which has been emitted from the light source 11 as the light beam 4a onto the detector 12. The reflector 6 is located in its own housing 16 on a holding device 18. In the transmitting and receiving unit there is a MEMS inclinometer 19 which is also used for vibration measurement. Here the fact is used that an inclinometer which is actually used to display the direction relative to the direction of gravitational acceleration and which responds in the frequency range of a few hertz or fractions of a hertz can also be used as an accelerometer, for an acceleration measurement perpendicular to the direction of gravitational acceleration. For vibration measurements the upper limits of the response frequencies of 10, 20 or even 40 kHz are conventionally used. Thus, for the choice of a combined inclinometer and accelerometer a frequency range of almost 0 Hz to 10 kHz or more is feasible. This frequency range is easily attainable with modern MEMS modules. It is simply necessary to consider the directional behavior of the module when the inclinometer is installed or the vibration sensor is placed on the machine. For the inclinometer this is directly considered during installation, when the vibration sensor is placed on the machine alignment of the sensor can preferably take place, as is described in EP 0 999 433 A2. The alignment of the sensor is displayed on the display of the computer for the user there.

The MEMS inclinometer 19 is mounted in the vicinity of one corner of the housing 15. So that it is possible to place the housing of the transmitting and receiving unit on a machine to be measured, this corner is provided with one or more guide edges, guide surfaces or guide bezels and is shaped to the inside, as indicated in Figure 2. Here the guide edges or guide bezels need not necessarily be straight, as in the figure. There can also be angles other than 90° between the guide edges or guide bezels. If for example there are three guide surfaces, one corner of the housing is turned up so to speak to the inside and acquires the shape of a triple mirror. So that the guide surfaces, edges or bezels enable good coupling to the machine to be measured for vibration measurement, they are preferably convexly curved.

Figure 3 shows another embodiment of the invention. Here a housing 15 which is attached to the shaft 1 with a holding device 17 contains a light source 11 which emits a light beam 4. This light beam is received in a first detector 9 mounted on the shaft 2 with a holding device 18 in a housing 16, and a second detector 10. These detectors are mounted in succession in the beam path. If the detector 9 which is located nearer the entry opening in the beam path is not transparent enough (which is normally the case when the detectors are made of or on semiconductor material), the attachment of the two detectors at different distances to the light source 11 can be accomplished for example by means of a beam splitter. The housing 15 again contains an inclinometer 19. In one recess of the housing 16 a vibration sensor 21 or a probe tip is inserted in order to take the vibration measurement. Conventionally the optoelectronic receiving unit in the housing 16 is attached with two rods to a clamping device 18 on the shaft to be aligned which has a prism-shaped depression for adaptation to the shaft. The two rods extend parallel to one another from this clamping device and parallel to a line which runs radially to the shaft. Accordingly the housing 16 has two openings which penetrate the housing to hold the rods. The housing 16 and the optoelectronic receiving device contained in it are then fixed at a certain distance to the shaft, for example by way of clamping screws. These openings can be feasibly used for inserting a vibration sensor by for example their inner sides being provided with electrical contacts. When the corresponding contacts on the vibration sensor (21) to be inserted are pressed to the outside with springs, reliable electrical contact-making is achieved. As is described below, in one preferred configuration of the invention the vibration sensor is made as a two-axle or three-axle vibration sensor. In another configuration of the invention the vibration sensor is integrated into the housing and permanently installed. A probe tip is inserted into an opening provided for this purpose in the vicinity of this integrated vibration sensor. This probe tip is suitable only for recording vibration signals in one dimension. In this embodiment with the inclinometer in housing 15 and the vibration sensor in housing 16 or connected to housing 16, it is necessary to put both housings together in a predefined manner so that it is possible to benefit from the combined measurements of inclination and vibration.

All alignment devices of Figures 1 to 3 also contain an electronic evaluation unit which was not shown here. The transmitting and/or receiving units are connected by means of cables or wirelessly to this evaluation unit. This electronic evaluation unit is used for communication with the operators. How many of the data to be recorded have already been determined is communicated to the user on the display of this evaluation unit. Typically, working with this device begins with determination of the alignment when the system is shut down. Afterwards this alignment is corrected. The success of this correction is displayed on the display of the evaluation unit in the form of a comparison between the alignment tolerances and the determined offset values.

When the alignment process has been completed and the offset values are within the alignment tolerances, a characteristic which is a measure of the success of the just completed alignment process, therefore an alignment characteristic, is displayed to the operators on the display of the electronic evaluation device. Figure 4 shows a table with allowable tolerance values dependent on the shaft rpm. When the values for the offset are smaller after alignment than the tolerance values shown in Figure 4 with the pertinent heading "Excellent", the alignment characteristic can be for example in the region of 100. Maintaining the tolerance values labeled "Acceptable" in Figure 4 can for example cause an alignment characteristic in the vicinity of 50. Values for the offset which are outside of this tolerance lead to an evaluation of the alignment with a characteristic near zero.

It is furthermore indicated that at this point only some of the tasks to be performed with the measurement device have been completed. This indication can take place for example in the form of a bar and/or a percentage. This indication is designed to signal to the personnel that a vibration measurement must still be taken when the system has been started again. If after completion of the alignment process on the display of the electronic evaluation unit it is signalled that only part of the measurement task has been completed, this is a reason for the operators to remove the optoelectronic transmitting and/or receiving units from the shafts of the machine. In this way the process becomes safer. Damage to the measurement device can thus be avoided since the alignment sensors cannot be inadvertently forgotten on the shafts. The personnel thereupon prepare the alignment sensor for a vibration sensor or a probe tip to be connected to the alignment sensor when the vibration sensor is not integrated in the alignment sensor anyway.

Afterwards the machine is started again. When the machine is running, best at nominal rpm and after the completed warm-up phase, a vibration measurement can be taken with the alignment sensor and the vibration sensor. This vibration measurement best takes place once in the radial direction with reference to the two shafts which are aligned to one another and a second time in the axial direction with reference to the shafts which are aligned to one another. Advantageously this measurement can be taken with a single vibration sensor which is sensitive to vibrations in two or three spatial axes. A vibration characteristic can now be computed from the result of this vibration measurement or several measurements. This vibration characteristic can contain the ratio of the axial vibration to the radial vibration. If prior to beginning the alignment process with the machine still running a vibration measurement has already been taken, this vibration measurement can likewise be used for formation of the vibration characteristic. One example is the ratio of the vibration intensity in operation before alignment to the vibration intensity in operation after alignment. To compute the vibration characteristic, measurements in the radial and axial direction after alignment can also be used and are combined with measurements in the radial and axial direction before alignment in order to obtain a vibration characteristic.

When these procedures are completed, in the electronic evaluation unit the degree of execution of the tasks to be performed with the measurement device is set such that at this point all activities are considered completed. A graphic representation on the display of the electronic evaluation unit as a bar is complete, a percentage displayed there is now 100.

Moreover, in the memory of the electronic evaluation unit two characteristics are now stored, specifically on the one hand the alignment characteristic and on the other hand the vibration characteristic. These two characteristics can be normalized in a suitable manner. An alignment characteristic of 100 can for example constitute perfect alignment, an alignment characteristic near zero can mean very poor alignment. The vibration characteristic can be similarly normalized so that a vibration characteristic of 100 constitutes a good vibration picture, while a vibration characteristic near zero represents a poor vibration picture. As claimed in the invention, the ratio of the alignment characteristic to the vibration characteristic or the inverse thereof is displayed as a fraction on the display of the electronic evaluation direction. With this display as a fraction, it is also possible by computation to combine these two characteristics into one. Thus with the aforementioned sample values a ratio near the number one or 100% would constitute a roughly equally good result for the process of alignment and for the vibration picture. In addition the numerators and denominators of the fraction indicate how successful the process of alignment was or how good the vibration picture present after alignment is. A display of the two values of the numerator and denominator of the fraction further facilitates handling of the device for the operators.

### Industrial applicability

>

## Claims

1. Device for measuring the alignment state of a rotating machine and for vibration measurement, containing
an electronic evaluation device,
a first optoelectronic transmitting and/or receiving unit in a first housing (15),
a second optoelectronic transmitting and/or receiving unit with a housing (16) or a reflector in a second housing,
at least one optoelectronic transmitting and/or receiving unit being connected to the electronic evaluation device, and
at least one sensor (21) for vibration measurement,
at least one inclinometer (19)
wherein the electronic evaluation device is adapted to determine the alignment state of the rotating machine based on the alignment data from the first and/or second optoelectronic transmitting and/or receiving unit and/or the reflector and the inclinometer
wherein the sensor (21) for vibration measurement is arranged in the housing (15, 16) of an optoelectronic transmitting and/or receiving unit,
**characterized in that**
the device is set up so that the optoelectronic transmitting and/or receiving unit with the sensor for vibration measurement connected to it is coupled to the machine to be measured by means of guide surfaces, edges or bezels or a probe tip
and that the device is set up so that the inclinometer (19) in a housing (15, 16) of an optoelectronic transmitting and/or receiving unit is used in order to determine the measurement direction of the vibration sensor.

2. Device for measuring the alignment state and for vibration measurement as claimed in Claim 1, wherein the sensor for vibration measurement is connected to the optoelectronic transmitting and/or receiving unit with a plug-in capacity.

3. Device for measuring the alignment state and vibration measurement as claimed in Claim 1, wherein at least one sensor for vibration measurement is installed in the housing of the first optoelectronic transmitting and/or receiving unit.

4. Device for measuring the alignment state and vibration measurement as claimed in one of one preceding claims, wherein an inclinometer which is present in the housing of the optoelectronic transmitting and/or receiving unit is used as a sensor for vibration measurement.

5. Device for measuring the alignment state and vibration measurement as claimed in one of one preceding claims, wherein the inclinometer is a two- or three-dimensional inclinometer.

6. Device as claimed in one of the preceding claims, wherein at least one sensor for vibration measurement can detect vibrations in more than one direction.

7. Device as claimed in one of the preceding claims, wherein the vibration sensor is a MEMS vibration sensor.

8. Device as claimed in one of the preceding claims, wherein the inclinometer is a MEMS inclinometer.

9. Device as claimed in Claim 3, wherein the sensor for vibration measurement is coupled using a probe tip to the machine which is to be measured.

10. Method for determining a characteristic for the quality of alignment and a vibration characteristic of a rotating machine using the device according to any one of claims 1 to 9,
wherein the sensor for vibration measurement (21) is connected to an optoelectronic transmitting and/or receiving unit
and data determined with the vibration sensor are being used to determine the characteristic for the quality of alignment and the vibration characteristic **characterized in that** the optoelectronic transmitting and/or receiving unit with the vibration sensor connected to it is set up so that the sensor for vibration measurement is coupled to the machine to be measured by means of guide surfaces, edges or bezels or a probe tip and **characterized in that** an inclinometer (19) in a housing (15, 16) of an optoelectronic transmitting and/or receiving unit is used in order to determine the measurement direction of the vibration sensor.

11. Method as claimed in Claim 10, wherein the characteristic is formed from the ratio of a vibration characteristic measured in the axial direction to this vibration characteristic measured in the radial direction.

12. Method as claimed in Claim 10 or 11, wherein the characteristic is formed from the ratio of the vibration characteristic before alignment to this vibration characteristic after alignment.

13. Method as claimed in one of Claims 10 to 12; wherein the characteristic is formed from the ratio of a vibration characteristic measured at a rotary frequency to the vibration characteristic measured at a harmonic of this rotary frequency.

14. Method as claimed in one of Claims 10 to 13, wherein the offset values measured with the alignment sensor are considered in the formation of the characteristic.

15. Method as claimed in one of Claims 10 to 14, wherein the alignment tolerances are considered in the formation of the characteristic.

16. Method as claimed in Claim 10 to 15, wherein a further detection characteristic is formed which indicates how many of the data necessary for forming the characteristic for the quality of alignment have already been determined.

## Patentansprüche

1. Vorrichtung zur Messung des Ausrichtungszustands einer rotierenden Maschine und zur Schwingungsmessung, umfassend:
eine elektronische Bewertungsvorrichtung,
eine erste optoelektronische Sende- und/oder Empfangseinheit in einem ersten Gehäuse (15),
eine zweite optoelektronische Sende- und/oder Empfangseinheit mit einem Gehäuse (16) oder einem Reflektor in einem zweiten Gehäuse,
wobei wenigstens eine optoelektronische Sende- und/oder Empfangseinheit mit der elektronischen Bewertungsvorrichtung verbunden ist, und
wenigstens einen Sensor (21) zur Schwingungsmessung,
wenigstens einen Neigungsmesser (19),
wobei die elektronische Bewertungsvorrichtung dazu geeignet ist, den Ausrichtungszustand der rotierenden Maschine auf Basis der Ausrichtungsdaten von der ersten und/oder der zweiten optoelektronischen Sende- und/oder Empfangseinheit und/oder dem Reflektor und dem Neigungsmesser zu bestimmen,
wobei der Sensor (21) zur Schwingungsmessung in dem Gehäuse (15, 16) einer optoelektronischen Sende- und/oder Empfangseinheit angeordnet ist,
**dadurch gekennzeichnet, dass**
die Vorrichtung so eingerichtet ist, dass die optoelektronische Sende- und/oder Empfangseinheit, mit der der Sensor zur Schwingungsmessung verbunden ist, durch Führungsflächen, Kanten oder Abschrägungsflächen oder eine Sondenspitze mit der zu messenden Maschine gekoppelt wird, und
dass die Vorrichtung so eingerichtet ist, dass der Neigungsmesser (19) in einem Gehäuse (15, 16) einer optoelektronischen Sende- und/oder Empfangseinheit verwendet wird, um die Messrichtung des Schwingungssensors zu bestimmen.

2. Vorrichtung zur Messung des Ausrichtungszustands und zur Schwingungsmessung nach Anspruch 1, wobei der Sensor zur Schwingungsmessung steckfähig mit der optoelektronischen Sende- und/oder Empfangseinheit verbunden ist.

3. Vorrichtung zur Messung des Ausrichtungszustands und zur Schwingungsmessung nach Anspruch 1, wobei wenigstens ein Sensor zur Schwingungsmessung in dem Gehäuse der ersten optoelektronischen Sende- und/oder Empfangseinheit eingerichtet ist.

4. Vorrichtung zur Messung des Ausrichtungszustands und zur Schwingungsmessung nach einem der vorhergehenden Ansprüche, wobei ein Neigungsmesser, der in dem Gehäuse der optoelektronischen Sende- und/oder Empfangseinheit vorhanden ist, als Sensor zur Schwingungsmessung verwendet wird.

5. Vorrichtung zur Messung des Ausrichtungszustands und zur Schwingungsmessung nach einem der vorhergehenden Ansprüche, wobei der Neigungsmesser ein zwei- oder dreidimensionaler Neigungsmesser ist.

6. Vorrichtung nach einem der vorhergehenden Ansprüche, wobei wenigstens ein Sensor zur Schwingungsmessung Schwingungen in mehr als einer Richtung feststellen kann.

7. Vorrichtung nach einem der vorhergehenden Ansprüche, wobei der Schwingungssensor ein MEMS-Schwingungssensor ist.

8. Vorrichtung nach einem der vorhergehenden Ansprüche, wobei der Neigungsmesser ein MEMS-Neigungsmesser ist.

9. Vorrichtung nach Anspruch 3, wobei der Sensor zur Schwingungsmessung unter Verwendung einer Sondenspitze mit der zu messenden Maschine gekoppelt ist.

10. Verfahren zur Bestimmung einer Kennzahl für die Qualität der Ausrichtung und einer Schwingungskennzahl einer rotierenden Maschine unter Verwendung der Vorrichtung nach einem der Ansprüche 1 bis 9,
wobei der Sensor zur Schwingungsmessung (21) mit einer optoelektronischen Sende- und/oder Empfangseinheit verbunden ist,
und Daten, die mit dem Schwingungssensor bestimmt wurden, verwendet werden, um die Kennzahl für die Qualität der Ausrichtung und die Schwingungskennzahl zu bestimmen,
**dadurch gekennzeichnet, dass** die optoelektronische Sende- und/oder Empfangseinheit mit dem damit verbundenen Schwingungssensor so eingerichtet wird, dass der Sensor zur Schwingungsmessung durch Führungsflächen, Kanten oder Abschrägungsflächen oder eine Sondenspitze mit der zu messenden Maschine gekoppelt wird, und
**dadurch gekennzeichnet, dass** ein Neigungsmesser (19) in einem Gehäuse (15, 16) einer optoelektronischen Sende- und/oder Empfangseinheit verwendet wird, um die Messrichtung des Schwingungssensors zu bestimmen.

11. Verfahren nach Anspruch 10, wobei die Kennzahl aus dem Verhältnis einer in der Achsenrichtung gemessenen Schwingungskennzahl zu dieser in der radialen Richtung gemessenen Schwingungskennzahl gebildet wird.

12. Verfahren nach Anspruch 10 oder 11, wobei die Kennzahl aus dem Verhältnis der Schwingungskennzahl vor der Ausrichtung zu dieser Schwingungskennzahl nach der Ausrichtung gebildet wird.

13. Verfahren nach einem der Ansprüche 10 bis 12, wobei die Kennzahl aus dem Verhältnis einer bei einer Drehfrequenz gemessenen Schwingungskennzahl zu der bei einer Harmonischen dieser Drehfrequenz gemessenen Schwingungskennzahl gebildet wird.

14. Verfahren nach einem der Ansprüche 10 bis 13, wobei die mit dem Ausrichtungssensor gemessenen Versatzwerte bei der Bildung der Kennzahl berücksichtigt werden.

15. Verfahren nach einem der Ansprüche 10 bis 14, wobei die Ausrichtungstoleranzen bei der Bildung der Kennzahl berücksichtigt werden.

16. Verfahren nach Anspruch 10 bis 15, wobei eine weitere Feststellkennzahl gebildet wird, die angibt, wie viele der Daten, die zur Bildung der Kennzahl für die Qualität der Ausrichtung nötig sind, bereits bestimmt wurden.

## Revendications

1. Dispositif de mesure de l'état d'alignement d'une machine rotative et de mesure des vibrations, contenant
un dispositif d'évaluation électronique,
une première unité émettrice et / ou réceptrice optoélectronique dans un premier boîtier (15),
une deuxième unité émettrice et / ou réceptrice optoélectronique dotée d'un boîtier (16) ou d'un réflecteur dans un deuxième boîtier,
au moins une unité émettrice et / ou réceptrice optoélectronique étant reliée au dispositif d'évaluation électronique, et
au moins un capteur (21) de mesure des vibrations,
au moins un inclinomètre (19),
le dispositif d'évaluation électronique étant prévu pour déterminer l'état d'alignement de la machine rotative en se basant sur les données d'alignement provenant de la première et / ou de la deuxième unité émettrice et / ou réceptrice optoélectronique et / ou du réflecteur et de l'inclinomètre,
le capteur (21) de mesure des vibrations étant disposé dans le boîtier (15, 16) d'une unité émettrice et / ou réceptrice optoélectronique,
**caractérisé en ce que**
le dispositif est configuré de telle façon que l'unité émettrice et / ou réceptrice optoélectronique à laquelle est relié le capteur de mesure des vibrations soit couplée à la machine devant faire l'objet de la mesure au moyen de surfaces de guidage, de bords ou de lunettes ou d'une pointe de sonde
et **en ce que** le dispositif est configuré de telle façon que l'inclinomètre (19) situé dans le boîtier (15, 16) d'une unité émettrice et / ou réceptrice optoélectronique est utilisé afin de déterminer la direction de mesure du capteur de vibrations.

2. Dispositif de mesure de l'état d'alignement et de mesure des vibrations selon la revendication 1, le capteur de mesure des vibrations étant relié à l'unité émettrice et / ou réceptrice optoélectronique avec une capacité d'enfichage.

3. Dispositif de mesure de l'état d'alignement et de mesure des vibrations selon la revendication 1, au moins un capteur de mesure des vibrations étant installé dans le boîtier de la première unité émettrice et / ou réceptrice optoélectronique.

4. Dispositif de mesure de l'état d'alignement et de mesure des vibrations selon l'une des revendications précédentes, un inclinomètre qui est présent dans le boîtier de l'unité émettrice et / ou réceptrice optoélectronique étant utilisé comme capteur de mesure des vibrations.

5. Dispositif de mesure de l'état d'alignement et de mesure des vibrations selon l'une des revendications précédentes, l'inclinomètre étant un inclinomètre bi- ou tridimensionnel.

6. Dispositif selon l'une des revendications précédentes, au moins un capteur de mesure des vibrations pouvant détecter des vibrations dans plus d'une direction.

7. Dispositif selon l'une des revendications précédentes, le capteur de vibrations étant un capteur de vibrations MEMS.

8. Dispositif selon l'une des revendications précédentes, l'inclinomètre étant un inclinomètre MEMS.

9. Dispositif selon la revendication 3, le capteur de mesure des vibrations étant couplé à l'aide d'une pointe de sonde à la machine qui doit faire l'objet de la mesure.

10. Procédé de détermination d'une caractéristique de la qualité d'alignement et d'une caractéristique de vibrations d'une machine rotative à l'aide du dispositif selon l'une quelconque des revendications 1 à 9,
le capteur de mesure des vibrations (21) étant relié à une unité émettrice et / ou réceptrice optoélectronique et des données déterminées à l'aide du capteur de vibrations étant utilisées pour déterminer la caractéristique de la qualité d'alignement et la caractéristique de vibrations,
**caractérisé en ce que** l'unité émettrice et / ou réceptrice optoélectronique à laquelle est relié le capteur de vibrations est configurée de telle façon que le capteur de mesure des vibrations soit couplé à la machine devant faire l'objet de la mesure au moyen de surfaces de guidage, de bords ou de lunettes ou d'une pointe de sonde
et **caractérisé en ce qu'**un inclinomètre (19) situé dans un boîtier (15, 16) d'une unité émettrice et / ou réceptrice optoélectronique est utilisé afin de déterminer la direction de mesure du capteur de vibrations.

11. Procédé selon la revendication 10, la caractéristique étant formée à partir du rapport d'une caractéristique de vibrations mesurée dans la direction axiale à ladite caractéristique de vibrations mesurée dans la direction radiale.

12. Procédé selon la revendication 10 ou 11, la caractéristique étant formée à partir du rapport de la caractéristique de vibrations avant alignement à ladite caractéristique de vibrations après alignement.

13. Procédé selon l'une des revendications 10 à 12, la caractéristique étant formée à partir du rapport d'une caractéristique de vibrations mesurée à une fréquence de rotation à la caractéristique de vibrations mesurée à une harmonique de cette fréquence de rotation.

14. Procédé selon l'une des revendications 10 à 13, les valeurs de décalage mesurées à l'aide du capteur d'alignement étant prises en considération dans la formation de la caractéristique.

15. Procédé selon l'une des revendications 10 à 14, les tolérances d'alignement étant prises en considération dans la formation de la caractéristique.

16. Procédé selon les revendications 10 à 15, une autre caractéristique de détection étant formée, qui indique combien des données nécessaires pour former la caractéristique de la qualité d'alignement ont déjà été déterminées.
